# EUROPEAN PATENT APPLICATION

(11) **EP 3 435 320 A1**
(43) Date of publication of application: **30.01.2019**
(21) Application number: 16896592.9
(22) Date of filing: 15.11.2016
(51) Int. Cl.: G06Q 50/06

(54) **INTELLIGENT HOUSEHOLD ENERGY INTERNET OF THINGS SYSTEM FOR INTELLIGENT CITY SYSTEM**

(30) Priority: 26.03.2016 CN 201610182058
(71) Applicant: Chengdu Qinchuan IoT Technology Co., Ltd., Sichuan 610100 (CN)
(72) Inventor: SHAO, Zehua, Chengdu Sichuan 610100 (CN)
(74) Representative: Locas, Davide
(86) International application number: PCT/CN2016/105874
(87) International publication number: WO 2017/166823

(57) **Abstract**

An intelligent household energy Internet of Things system for an intelligent city system, belonging to an Internet of Things system. The system comprises: an object platform at least comprising an energy meter, wherein the energy meter accesses an intelligent Internet of Things gateway; a communication platform respectively connected to the object platform and a management platform by means of a network; the management platform respectively connected to the communication platform and a service platform, wherein the management platform at least comprises an operator server; the service platform respectively connected to the management platform and a user platform, and at least comprising an operator server; and the user platform accessing the service platform and at least comprising a user terminal. One-to-one, many-to-one and many-to-many connection methods can be achieved between various servers, an intelligent Internet of Things gateway, a user and an energy meter in the Internet of Things system, so as to transmit sensing information and control information, thus satisfying different requirements of Internet of Things usage in an intelligent city system.

## Description

### Technical Field

The present disclosure relates to an Internet-of-Things system, and particularly the present disclosure mainly relates to a smart household energy-related Internet-of-Things system applicable to a smart city system.

### Background Art

Accompanying the global informationization wave brought by the rapid development of internet technology is the increasing requirements and demands for an intelligent human world. Ever since IBM US first proposed the development strategy of "Smarter Planet" in 2008, the developed countries in the world have come to realize that a smart city is an irresistible trend of development of human society and have being putting a great and active effort to the construction of smart cities. On the basis of the construction of digital cities, some developed regions in China are also on their way to exploration of smart city construction. Beijing, Shanghai and Nanjing, etc., have made smart city a major subject. Currently, both domestic and abroad construction and development of smart city still remain in the categories of information city and intelligent city, which lacks deep understanding of a smart city and a clear definition about the architecture of smart city. Currently, the key point of construction and research on smart city mainly focuses on service and application, and there's no clear direction on how to construct a smart city. Therefore, the beautiful vision of smart city is still a "castle in the air" and is unable to be landed.

### Summary of the Disclosure

One of the purposes of the present disclosure is to, aiming at the above deficiencies, provide a smart household energy-related Internet-of-Things system applicable to a smart city system with the intension to solve the technical problems that, in the prior art, there is yet no clear definition about the architecture of smart city, that the key point of research mainly focuses on its service and application, and that we are lacking a reference model for the network system architecture of smart city.

The present disclosure adopts the following technical solutions to the above technical problems.

The present disclosure provides a smart household energy-related Internet-of-Things system applicable to a smart city system, wherein the Internet-of-Things system comprises: an object platform comprising at least one energy meter connected with an intelligent gateway for Internet of Things, wherein the at least one energy meter is configured to collect sensing information and transmit the sensing information to the intelligent gateway for Internet of Things, and the at least one energy meter is configured to receive, via the intelligent gateway for Internet of Things, control information and perform control; a communication platform connected, via a network, with each of the object platform and a management platform, wherein the communication platform comprises at least one intelligent gateway for Internet of Things, wherein the at least one intelligent gateway for Internet of Things is configured to transmit the sensing information to the management platform and transmit the control information to the object platform; a management platform connected with each of the communication platform and a service platform, wherein the management platform comprises at least one operator server, and the at least one operator server is configured to transmit the sensing information to the service platform and transmit the control information to the communication platform; a service platform connected with each of the management platform and a user platform, wherein the service platform comprises at least one operator server, and the at least one operator server of the service platform is configured to transmit the sensing information to the user platform and transmit the control information to the management platform; and a user platform connected with the service platform and comprising at least one user terminal, wherein the at least one user terminal is configured to receive the sensing information and transmit the control information to the service platform.

Preferably, a further technical solution is that the at least one user terminal is connected, via a public service network, with the operator server of the service platform.

As a further technical solution, each of the operator servers of the management platform and the service platform comprises an operator communication server, an operator management server and an operator service platform server connected in sequence, with the operator communication server accessing the intelligent gateway for Internet of Things, the operator service platform server accessing the public service network, and the operator communication server, the operator management server and the operator service platform server being independent of each other or integrated into one in a physical system of a smart city.

As a further technical solution, the object platform comprises a plurality of energy meters, the communication platform comprises one intelligent gateway for Internet of Things, and the plurality of energy meters access a same intelligent gateway for Internet of Things.

As a further technical solution, the object platform comprises a plurality of energy meters, the communication platform comprises a plurality of intelligent gateways for Internet of Things, and the plurality of energy meters access respective intelligent gateways for Internet of Things, respectively.

As a further technical solution, the object platform comprises a plurality of energy meters, the communication platform comprises a plurality of intelligent gateways for Internet of Things, and the Internet-of-Things system comprises a plurality of sensing units, with each of the sensing units comprising at least one energy meter, and the at least one energy meter in each of the sensing units accessing a same intelligent gateway for Internet of Things.

As a further technical solution, the energy meters in the sensing units are energy meters providing a same kind of service or different kinds of service.

As a further technical solution, the communication platform comprises one intelligent gateway for Internet of Things, the management platform and the service platform each comprise a plurality of operator servers, and the intelligent gateway for Internet of Things accesses the plurality of operator servers of the management platform.

As a further technical solution, the communication platform comprises a plurality of intelligent gateways for Internet of Things, the management platform and the service platform each comprise a plurality of operator servers, and the plurality of intelligent gateways for Internet of Things access respective operator servers of the management platform, respectively.

As a further technical solution, the communication platform comprises a plurality of intelligent gateways for Internet of Things, the management platform and the service platform each comprise a plurality of operator servers, and the Internet-of-Things system comprises a plurality of intelligent gateway units, with each of the intelligent gateways unit comprising at least one intelligent gateway for Internet of Things, and the at least one intelligent gateway for Internet of Things in each of the intelligent gateway units accessing a same operator server of the management platform.

As a further technical solution, the intelligent gateways for Internet of Things in the intelligent gateway units are intelligent gateways for Internet of Things providing a same kind of service or different kinds of service.

As a further technical solution, the communication platform comprises a plurality of intelligent gateways for Internet of Things, the management platform and the service platform each comprise a plurality of operator servers, and the management platform comprises a plurality of server units, with each of the server units comprising at least one operator server, and the at least one operator server in each of the server units accessing a same intelligent gateway for Internet of Things.

As a further technical solution, the user platform comprises one user terminal, the management platform and the service platform each comprise a plurality of operator servers, and the one user terminal accesses, via the public service network, the plurality of operator servers of the service platform.

As a further technical solution, the user platform comprises a plurality of user terminals, the management platform and the service platform each comprise one operator server, and the plurality of user terminals all access, via the public service network, a same operator server of the service platform.

As a further technical solution, the user platform comprises a plurality of user terminals, the management platform and the service platform each comprise a plurality of operator servers, and the plurality of user terminals access, via the public service network, respective operator servers of the service platform, respectively.

As a further technical solution, the user platform comprises a plurality of user terminals, the management platform and the service platform each comprise a plurality of operator servers, and the Internet-of-Things system comprises a plurality of user units, with each of the user units comprising at least one user terminal, and the at least one user terminal in each of the user units accessing, via the public service network, a same operator server of the service platform.

As a further technical solution, the user terminals in the user units are user terminals providing a same kind of service or different kinds of service.

As a further technical solution, the user platform comprises a plurality of user terminals, the management platform and the service platform each comprise a plurality of operator servers, and the service platform comprises a plurality of server units, with each of the server units comprising at least one operator server, and the at least one operator server in each of the server units accessing, via the public service network, a same user terminal.

As a further technical solution, the operator servers in the server units are operator servers providing a same kind of service or different kinds of service.

As a further technical solution, the energy meter comprises any one or more of an intelligent gas meter, an intelligent electric energy meter, an intelligent heat energy meter and an intelligent water meter.

As a further technical solution, the operator server comprises any one or more of a gas company server, an electric power company server, a heating power company server and a water supply company server.

The beneficial effects of the present disclosure over the prior art include the following aspects: by configuring the Internet of Things with a system structure with objects, communication, management, service and users, the circulation process of information becomes clearer in the Internet of Things, and transmission through multiple nodes further reduces the risk of information tampering during circulation and transmission; sensing information and control information in the Internet-of-Things system are transmitted, via two different transmission paths, in opposite directions between the object platform and the user platform, which forms a closed loop, preventing mutual interference between the sensing information and the control information during transmission; in addition, the operator servers, intelligent gateways for Internet of Things, user terminals and energy meters in the Internet-of-Things system may be connected with each other in one-to-one, multi-to-one or multi-to-multi manner, etc. for transmission of sensing information and control information, satisfying the various requirements of using Internet of Things in a smart city system; further, the smart household energy-related Internet-of-Things system applicable to a smart city system has a simple structure and diverse transmission manners, bears an important reference significance for various model settings in the construction of smart cities, can be used as different function Internet-of-Things systems in a smart city design system, and has a wide range of application.

### Brief Description of Drawings

Fig. 1 is a schematic structural diagram for illustrating an embodiment of the present disclosure;
Fig. 2 is a schematic structural block diagram for illustrating a first embodiment of the present disclosure;
Fig. 3 is a schematic structural block diagram for illustrating a second embodiment of the present disclosure;
Fig. 4 is a schematic structural block diagram for illustrating a third embodiment of the present disclosure;
Fig. 5 is a schematic structural block diagram for illustrating a fourth embodiment of the present disclosure;
Fig. 6 is a schematic structural diagram for illustrating another embodiment of the present disclosure;
Fig. 7 is a schematic structural block diagram for illustrating a first implementation of another embodiment of the present disclosure;
Fig. 8 is a schematic structural block diagram for illustrating a second implementation of another embodiment of the present disclosure;
Fig. 9 is a schematic structural block diagram for illustrating a third implementation of another embodiment of the present disclosure;
Fig. 10 is a schematic structural block diagram for illustrating a fourth implementation of another embodiment of the present disclosure.

### Detailed Description of Embodiments

The present disclosure will be further explained with reference to accompanying drawings.

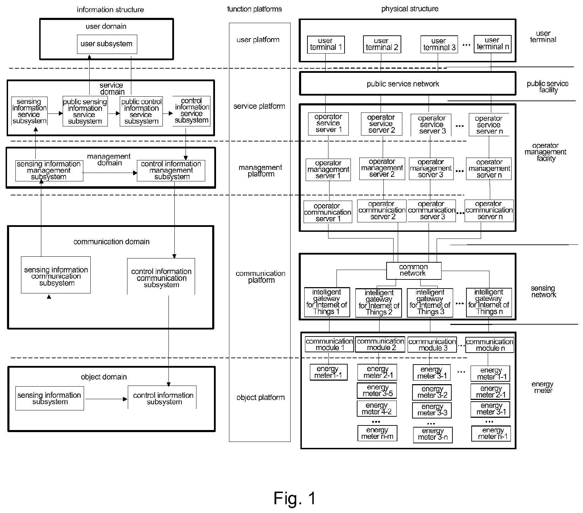

Referring to Fig. 1, an embodiment of the present disclosure provides a smart household energy-related Internet-of-Things system applicable to a smart city system. The Internet-of-Things system includes:
an object platform including at least one energy meter connected with an intelligent gateway for Internet of Things, where the at least one energy meter is used to collect sensing information and transmit, via a communication module, the sensing information to the intelligent gateway for Internet of Things, and the at least one energy meter is used to receive, via the intelligent gateway for Internet of Things, control information and perform control;
a communication platform connected, via a network, with each of the object platform and a management platform, wherein the communication platform includes at least one Intelligent gateway for Internet of Things, where the at least one the intelligent gateway for Internet of Things is used to transmit the sensing information to the management platform and transmit the control information to the object platform;
a management platform connected with each of the communication platform and a service platform, where the management platform includes at least one operator server, and the at least one operator server is used to transmit the sensing information to the service platform and transmit the control information to the communication platform;
a service platform connected with each of the management platform and a user platform, where the service platform also includes at least one operator server, and the at least one operator server of the service platform is used to transmit the sensing information to the user platform and transmit the control information to the management platform; and
a user platform connected with the service platform and including at least one user terminal, wherein the at least one user terminal is used to receive the sensing information and transmit the control information to the service platform.

In the present embodiment, generally, the above at least one user terminal needs a public service network connected with it to be connected to the operator server of the service platform and the management platform; and generally, the operator server transmits, also via the public service network, the sensing information to the user platform, and receives the control information output by the user terminal via the public service network.

As described above in the present embodiment, the operator server in the Internet-of-Things system mainly act to output the sensing information to the user terminal via the public service network and receive the control information output by the user terminal via the public service network. Therefore, exactly as illustrated in Fig. 1, the above operator server in a practical application may include an operator communication server, an operator management server and an operator service server connected in sequence. Specifically, the operator communication server accesses the intelligent gateway for Internet of Things and the operator service server accesses the public service network. The three of them may be independent of each other in the Internet-of-Things system according to different needs, or may also be integrated into one, or the two of them may be integrated into one and the rest one of them is independent. In other words, if the three of them are integrated into one, the operator server will be capable of communication, management and service at a same time, transmit sensing information to the user terminal via the public service network and receive control information from the user terminal via the public service network.

Exactly as illustrated in Fig. 1, the object platform is the furthest platform from users in the function platforms of the smart city Internet of Things for. Sensing information starts at objects and is converted by the user platform or management platform into control information which ends at objects, thus forming a closed-loop information structure where the user platform or management platform may perform control over objects according to the sensing information. The object platform corresponds to the object domain in the information structure and corresponds to the energy meters in the system structure. In addition, in the information structure, its object may also be a person, a thing or a combination of a person and a thing. An object and a user are mutually convertible. When a user acts as an object to be sensed, the user is an object. When an object receives sensing information and sends corresponding control information, the object is a user. All the energy meters in the physical structure of the object platform for a smart city are intelligent energy meters which may be several energy meters for a same kind of service or may be several energy meters providing different kinds of service.

The communication platform is a bridge for circulating information throughout the Internet of Things function system. The communication platform corresponds to the communication domain in the information structure and includes two parts in the physical structure, i.e., in Fig. 1 the sensing network part and the communication modules of the energy meters, and the operator communication server in the operator management facility, where the sensing network part includes two parts, i.e. the intelligent gateways for Internet of Things and the common network. The common network mainly refers to mobile common network and Internet, etc. The intelligent gateways for Internet of Things are different from the existing ordinary gateways. They are intelligent gateways for Internet of Things which are capable of intelligent management. Object information sensed by the energy meters is sent to the intelligent gateways for Internet of Things, via the communication modules for the energy meters, and then transmitted by the intelligent gateways for Internet of Things to the operator management facility via the common network.

The management platform is mainly a platform which comprehensively manages the entire Internet of Things function system. The management platform corresponds to the management domain in the information structure, and corresponds to the operator management server in the operator management facility in the system structure. The management domain in the information structure of the service platform includes a sensing information management system and a control information management system. The operator management server in the system structure may be several operators providing a same kind of service, or may be several operators providing different kinds of service, or may be a specific operator providing a specific kind of service. Operator management server is the carrier for the sensing information management system and the control information management system in the information structure. An operator plays two roles, service and management. When the operator provides service, it is a service platform. When the operator manages, it is a management platform.

The service platform is a platform which mainly provides public service and operator service to users. The service platform corresponds to the service domain in the information structure and corresponds to two parts in the system structure, one of which is the public service facility, the other being the operator service server in the operator management facility. Public service network is needed for the operator service server to serve users. That is to say, either the transmission of the sensing information from the operator service server to a user, or the sending of the control information from a user to the operator service server, has to be done via the public service network. This helps to guarantee the information security of the entire Internet of Things function system. The service domain in the information structure of the service platform includes a sensing information service system, a control information service system, a public sensing information service system and a public control information service system. The operator service server in the system structure of the service platform may be several operators providing a same kind of service, or several operators providing different kinds of service, or a specific operator providing a specific kind of service. The operator service server is the carrier for the sensing information service system and the control information service system in the information structure. The public service facility (i.e. the public service network) is the carrier for the public sensing information service system and the public control information service system in the information structure. Public service mainly includes information resource exchange, market resource exchange, law supervision, operation maintenance, public data fusion, public data storage, public data processing, public data accessing, identification management service, geographic information service, service management and user service management, etc.

The user platform corresponds to the user domain in the information structure and corresponds to the user terminal in the system structure. User(s) in the user platform may be independent individual users or a user group, or may be a person or a thing, or may be an enterprise user or a government user. Any object served by the Internet of Things function system is a user. In the information structure, a user refers to, in general, any object accepting the service of the Internet of Things function system, which is an abstract concept. In the system structure, user(s) refers to specific user(s) which may be several users enjoying a same kind of service, or several users enjoying different kinds of service, or a certain user enjoying several different kinds of service, or a specific user enjoying a certain kind of service.

The user, object, communication, management and service in the information system structure of the Internet of Things are all conceptual categories. In the various function systems of a smart city, its user, object, communication, management and service are the nodes of those function systems. In practical application, the nodes of the function systems are mutually convertible. A same entity may belong to different nodes in different function systems and its Internet of Things information systems may intersect. Similarly, a same person acts as different nodes in different function systems of a smart city. A same physical entity belongs to several Internets of Things in a smart city and also acts as several nodes. Therefore, the various function systems of a smart city contain, cross and interact with each other, and their physical systems are complicated, but their information systems have a unitary multi-layer and five-domain structure.

In a smart energy platform, an intelligent gas meter, an intelligent electric energy meter, an intelligent heat energy meter and an intelligent water meter may be used as the above energy meter, and a gas server, an electric energy server, a heat energy server and a tap water server, etc. may be used as the above operator server (capable of communication, management and service). And the currently mainstream smartphones, PCs and other terminal devices capable of controlling may be used as the aforementioned user terminal.

Referring to Fig. 1, the first application of the above fundamental embodiment of the present disclosure uses multi-to-one connection manner. That is, a plurality of energy meters are provided in the object platform, and one intelligent gateway for Internet of Things is provided in the communication platform. The plurality of energy meters are all connected with the same intelligent gateway for Internet of Things, and it is the intelligent gateway for Internet of Things that manages the sensing information from the energy meters as a whole and transmits it to the servers in the major operator platforms via a common network.

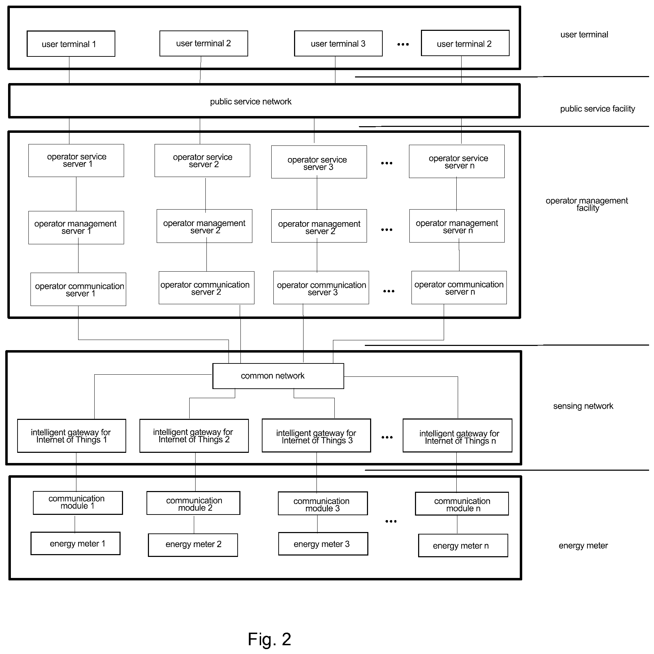

With reference to Figs. 1-5, the second application of the above fundamental embodiment of the present disclosure uses multi-to-multi connection manner. That is, a plurality of energy meters are provided in the object platform, and a plurality of intelligent gateways for Internet of Things are provided in the communication platform. In this case, there are two kinds of connection situations:
One is that the plurality of energy meters access their respective intelligent gateways for Internet of Things, as shown in Fig. 2, that is, the energy meters and the intelligent gateways for Internet of Things are connected one to one, in the multi-to-multi case. For example, intelligent gateways for Internet of Things 1, 2, 3 and 4 correspond to energy meters 1, 2, 3 and 4 respectively in Fig. 2, and if intelligent gateway for Internet of Things 1 is a tap water intelligent gateway, then energy meter 1 would be an intelligent water meter.

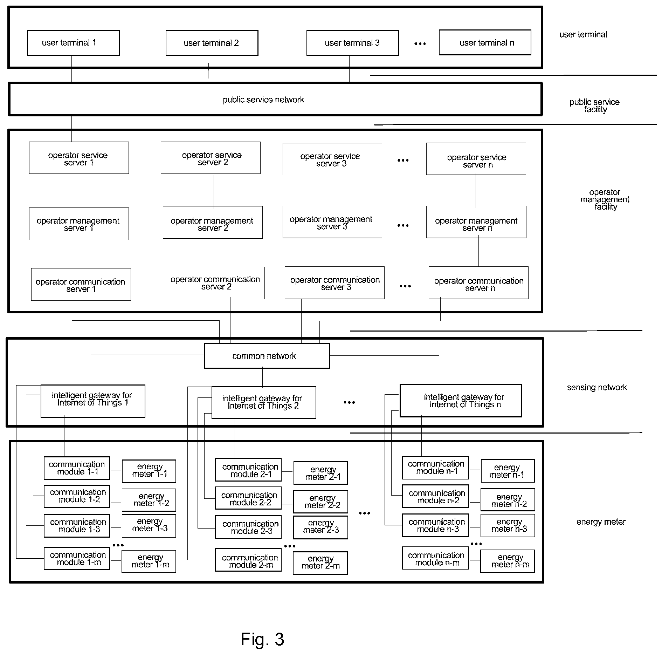

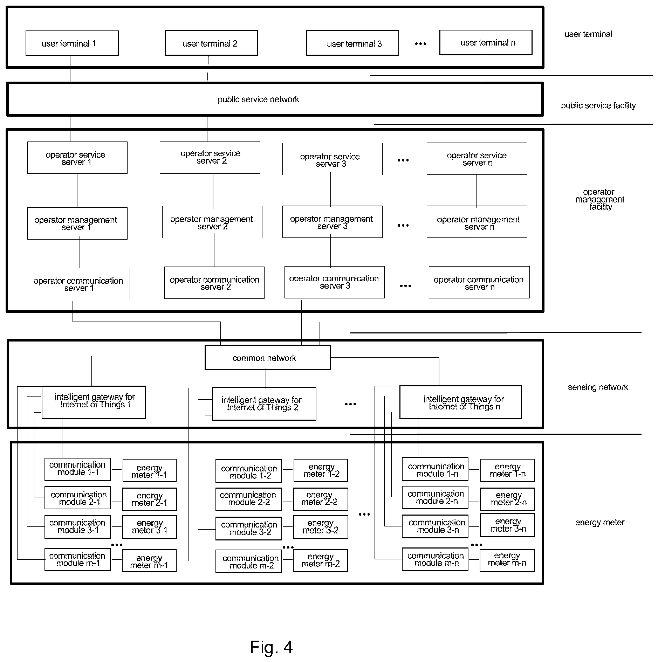

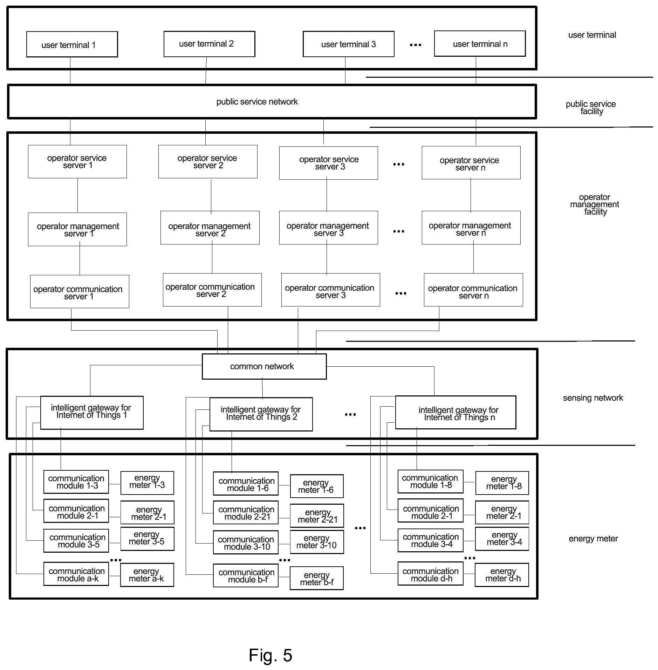

The other is that a plurality of energy meters are grouped into a plurality of sensing units, as shown in Figs. 3-5, and the energy meters in each of the sensing unit access a same intelligent gateway for Internet of Things. And the energy meters in the aforementioned sensing units are ones for a same kind of service as shown in Fig. 3 and ones providing different kinds of service as shown in Figs. 4 and 5. For example, when applied in the energy platform of a smart city, intelligent gateway for Internet of Things 2 as shown in Fig. 3 corresponds to energy meters 2-1, 2-2 and 2-3, and if intelligent gateway for Internet of Things 2 is a tap water intelligent gateway, then energy meters 2-1, 2-2 and 2-3 would be three intelligent water meters. Further, water meters and electric energy meters may also share one intelligent gateway for Internet of Things, or intelligent water meters, gas meters and heat energy meters may share one intelligent gateway for Internet of Things, specifically described below.

In Fig. 4, several energy meters providing different kinds of service belong to a single user, and Intelligent gateway for Internet of Things 1 corresponds to energy meters 1-1, 2-1 and 3-1, where intelligent gateway for Internet of Things 1 is the intelligent gateway for water, gas and heat, and energy meter 1-1 is an intelligent water meter, energy meter 2-1 is an intelligent gas meter, and energy meter 3-1 is an intelligent heat energy meter.

In Fig. 5, several energy meters providing different kinds of service belong to different users, intelligent gateway for Internet of Things 2 corresponds to energy meters 1-6, 2-21 and 3-10, where Intelligent gateway for Internet of Things 2 is the intelligent gateway for water, gas and heat, and energy meter 1-6 is an intelligent water meter, energy meter 2-21 is an intelligent gas meter, and energy meter 3-10 is an intelligent heat energy meter.

In the above embodiment of the present disclosure, by configuring the Internet of Things with a system structure with objects, communication, management, service and users, the circulation process of information becomes clearer in the Internet of Things, and transmission through multiple nodes further reduces the risk of information tampering during circulation and transmission. Sensing information and control information in the Internet-of-Things system are transmitted, via two different transmission paths, in opposite directions between the object platform and the user platform, which forms a closed loop, preventing mutual interference between the sensing information and the control information during transmission. In addition, the servers, intelligent gateways for Internet of Things, users and energy meters in the Internet-of-Things system may be connected with each other in one-to-one, multi-to-one or multi-to-multi manner, etc. for transmission of sensing information and control information, satisfying the various requirements of using Internet of Things in a smart city system.

Referring to Figs. 1-4, as aforementioned, by the idea that the energy meters are connected with the intelligent gateways for Internet of Things in the Internet-of-Things system as described, the other nodes in the Internet-of-Things system of the present disclosure may be connected in a similar way, as detailed below. Those skilled in the art would have thought of various similar embodiments of the present disclosure in different fields of application with references to the following description.

According to one of the embodiments of the present disclosure, one Intelligent gateway for Internet of Things is provided in the above communication platform, and a plurality of operator servers are provided in the management platform, and the Intelligent gateway for Internet of Things is connected with each of the plurality of operator servers, that is, they are connected in a one-to-multi manner.

In addition, a plurality of Intelligent gateways for Internet of Things may be provided in the above communication platform, and a plurality of operator servers may be provided in the management platform and the service platform, and the plurality of Intelligent gateways for Internet of Things access their respective operator servers, that is, they are connected in a one-to-one manner.

Similar to the above embodiment, a plurality of Intelligent gateways for Internet of Things may be provided in the communication platform, and a plurality of operator servers may be provided in the management platform and the service platform, and the plurality of Intelligent gateways for Internet of Things are grouped into a plurality of intelligent gateway units, and the energy meters in each of the intelligent gateway unit access a same operator server. That is, they are connected in a multi-to-multi manner. In the case of multi-to-multi connections, there are two circumstances, one of which is that the intelligent gateways for Internet of Things in the intelligent gateway units are for a same kind of service, and the other being that the intelligent gateways for Internet of Things in the intelligent gateway units provide different kinds of service. See the above embodiments where the energy meters and the intelligent gateways for Internet of Things are connected in a multi-to-multi manner for details.

By such idea, the structure in the above embodiment may also be reversed, that is, a plurality of intelligent gateways for Internet of Things are provided in the communication platform, and a plurality of operator servers are provided in the management platform and the service platform, and the difference lies in that the plurality of operator servers are grouped into a plurality of server units and the operator servers in each of the server units access a same intelligent gateway for Internet of Things. In such multi-to-multi connection manner, there are also two circumstances, one of which is that the operator servers in the server units are for a same kind of service, and the other being that the operator servers in the server units provide different kinds of service. See still the above embodiments where the energy meters and the intelligent gateways for Internet of Things are connected in a multi-to-multi manner for details.

According to another embodiment of the present disclosure, one user terminal is provided in the user platform, and a plurality of operator servers are provided in the management platform and the service platform, and the one user terminal is connected, via a public service network, with each of the plurality of operator servers, that is, they are connected in a one-to-multi manner.

In addition, a plurality of user terminals may be provided in the above user platform, and only one operator server is provided in each of the management platform and the service platform, so that the plurality of user terminals are connected, via the public service network, with a same operator server, that is, they are connected in a multi-to-one manner.

Likewise, a plurality of user terminals may be provided in the above user platform, and a plurality of operator servers are provided in the management platform and the service platform, and the plurality of user terminals are connected with their respective operator servers via the public service network, that is, they are connected in a one-to-one manner.

Similar to the above embodiment, a plurality of user terminals are provided in the user platform, and a plurality of operator servers are provided in the management platform and the service platform, and the plurality of user terminals may be grouped into a plurality of user units, and the user terminals in each of the user units access, via the public service network, a same operator server, that is, they are connected in a multi-to-multi manner. In such multi-to-multi connection manner, there are two circumstances, one of which is that the user terminals in the user units are for a same kind of service, and the other being that the user terminals in the user units provide different kinds of service.

By such idea, the structure in the above embodiment may also be reversed, that is, a plurality of user terminals are still provided in the user platform and a plurality of operator servers are provided in the management platform and the service platform, and the difference lies in that the plurality of operator servers are grouped into a plurality of server units, and the operator servers in each of the server units access a same user terminal, and the connection between them may also be done via the above public service network. In such multi-to-multi connection manner, there are still two circumstances, one of which is that the operator servers in the server units are for a same kind of service, and the other being that the operator servers in the server units provide different kinds of service. Thereby, users may output control information to one or more operator servers of the management platform and the service platform through one or more user terminals over the public service network.

It is to be noted that the operator communication servers (i.e. gas communication servers, electric energy communication servers, heat energy communication servers and tap water communication servers), the operator management servers (i.e. gas management servers, electric energy management servers, heat energy management servers and tap water management servers) and the operator service servers (i.e. gas service servers, electric energy service servers, heat energy service servers and tap water service servers) constituting the operator servers (i.e. gas servers, electric energy servers, heat energy servers, and tap water servers) as described above may also be connected in one-to-one, multi-to-one or multi-to-multi manner as the above embodiments. Those skilled in the art would have reproduced a same with reference to the above embodiments and thus no details will be repeated here.

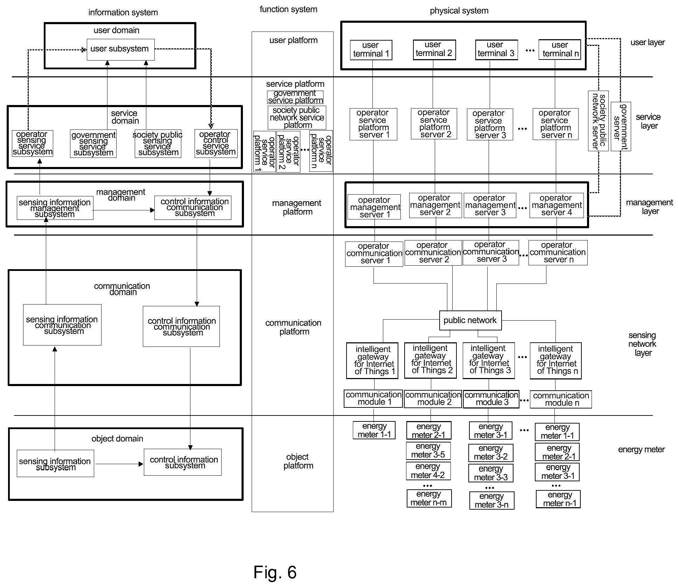

Referring to Fig. 6, another embodiment of the present disclosure provides a smart household energy-related Internet-of-Things system applicable to a smart city system. The Internet-of-Things system includes:
an object platform including at least one energy meter connected with an intelligent gateway for Internet of Things, where the at least one energy meter collects sensing information and transmits, via a communication module, the sensing information to the intelligent gateway for Internet of Things, and the at least one energy meter receives, via the intelligent gateway for Internet of Things, control information and performs control;
a communication platform connected, via a network, with each of the object platform and a management platform, where the communication platform includes at least one intelligent gateway for Internet of Things, where the at least one intelligent gateway for Internet of Things is used to transmit the sensing information to the management platform and transmit the control information to the object platform;
a management platform connected with each of the communication platform and a service platform, where the management platform includes at least one operator server, and the at least one operator server is used to transmit the sensing information to the service platform and transmit the control information to the communication platform;
a service platform connected with each of the management platform and a user platform, wherein the service platform includes at least one operator server, and the at least one operator server of the service platform is used to transmit the sensing information to the user platform and transmit the control information to the management platform; and
a user platform, which is connected with the service platform and including at least one user terminal, where the at least one user terminal is used to receive the sensing information and transmit the control information to the service platform.

In the present embodiment, generally, the above at least one user terminal needs a public service network, connected with it, to be connected to the service platform, and generally, the operator server in the service platform transmits, also via the public service network, the sensing information to the user platform, and receives, via the public service network, the control information output by the user terminal.

As described in the above embodiment, the operator servers in the service platform mainly act, in the Internet-of-Things system, to output the sensing information to the user terminal via the public service network and receive the control information output by the user terminal via the public service network. As shown in Fig. 6, in practical application, the above operator server(s) may include an operator communication server, an operator management server and an operator service platform server connected in sequence. Specifically, the operator communication server are connected with the intelligent gateway for Internet of Things and the operator service platform server is connected with the public service network. That is to say, the smart household energy-related Internet-of-Things system includes three types of operator servers which are operator communication server (corresponding to the communication platform), operator management server (corresponding to the management platform) and operator service platform server (corresponding to the service platform), respectively. The three of them may be provided independently from each other in the Internet-of-Things system according to different needs, or may be integrated into one, or the two of them may be integrated and the other is independent. In other words, when the three of them are integrated into one, the operator server will be capable of communication, management and service at a same time, transmit, via the public service network, sensing information to the user terminal and receive, via the public service network, control information from the user terminal.

Exactly as illustrated in Fig. 6, the object platform is the furthest platform from users in the function platforms of the smart household energy-related Internet-of-Things system. Sensing information (sensed information) starts at objects and is converted by the user platform or the management platform into control information which ends at objects, thus forming a closed-loop information structure where the user platform or the management platform may perform control over objects according to the sensing information. The object platform corresponds to the object domain in the information structure and corresponds to the energy meters in the system structure. The object and user are mutually convertible. When a user is used as an object to be sensed, the user is an object. When an object receives sensing information and sends corresponding control information, the object is a user. All the energy meters in the physical structure of the object platform of the smart household energy-related Internet-of-Things system are intelligent energy meters which may be several energy meters for a same kind of service or may be several energy meters providing different kinds of service.

The communication platform corresponds to the communication domain in the information structure and includes two parts in the physical structure, i.e. the communication modules for the energy meters, and the operator communication servers and the intelligent gateways for Internet of Things and the public network in Fig. 6. The public network mainly refers to mobile public network and Internet, etc. The Intelligent gateways for Internet of Things are different from the existing ordinary gateways. They are intelligent gateways for Internet of Things which are capable of intelligent management. Object information sensed by the energy meters is sent to the intelligent gateways for Internet of Things via the communication modules for the energy meters, and then transmitted by the intelligent gateways for Internet of Things to the operator communication servers in the operator management facility via the public network.

The management platform is mainly a platform which comprehensively manages the entire Internet of Things function system. The management platform corresponds to the management domain in the information structure, and corresponds to the operator management server in the operator management facility in the physical structure. The management domain in the information structure of the service platform includes a sensing information management subsystem and a control information management subsystem. The operator management server in the physical structure may be several operators providing a same kind of service, or may be several operators providing different kinds of service, or may be a specific operator providing a specific kind of service. An operator management server is the carrier for the sensing information management subsystem and the control information management subsystem in the information structure. An operator plays two roles, service and management. When the operator provides service, it is a service platform. When the operator manages, it is a management platform.

The service platform is a platform which mainly provides public service and operator service to users. The service platform corresponds to the service domain in the information structure and corresponds to an operator service platform server, a government server and a society public network server in the physical structure. Public service network is needed for the operator service platform server to serve users. That is to say, either the transmission of the sensing information from the operator service platform server to a user, or the sending of the control information from a user to the operator service platform servers, has to be done via the public service network. This helps to guarantee the information security of the entire Internet of Things function system. The service domain in the information structure of the service platform includes an operator sensing service subsystem, an operator control service subsystem, a government sensing service subsystem and a society public sensing service subsystem. The operator service platform server in the physical structure of the service platform may be several operators providing a same kind of service, or several operators providing different kinds of service, or a specific operator providing a specific kind of service. The operator service platform servers is the carrier for the operator sensing service subsystem and the operator control service subsystem in the information structure. The government server is the carrier for the government sensing service subsystem in the information structure. The society public network server is the carrier for the society public sensing service subsystem in the information structure. Public service mainly includes information resource exchange, market resource exchange, law supervision, operation maintenance, public data fusion, public data storage, public data processing, public data accessing, identification management service, geographic information service, service management and user service management, etc.

The user platform corresponds to the user domain in the information structure and corresponds to the user terminals in the physical structure. User(s) in the user platform may be an independent individual users or a user group, or may be a person or a things or may be an enterprise user or a government user. Any object served by the Internet of Things function system is a user. In the information structure, user(s) refers to, in general, any object accepting the service of the Internet of Things function system, which is an abstract concept. In the physical structure, user refers to specific user(s) which may be several users enjoying a same kind of service, or several users enjoying different kinds of service, or a certain user enjoying several different kinds of service, or a specific user enjoying a certain kind of service.

The user, object, communication, management and service in the information system structure of the Internet of Things are all conceptual categories. In the various function systems of a smart city, its user, object, communication, management and service are the nodes of those function systems. In practical application, the nodes of the function systems are mutually convertible. A same entity may belong to different nodes in different function systems and its Internet of Things information systems may intersect. Similarly, a same person may act as different nodes in different function systems of a smart city. A same physical entity belongs to different Internets of Things in a smart city and acts as several nodes. Therefore, the various function systems of a smart city contain, cross and interact with each other, and their physical systems are complicated, but their information systems have a unitary multi-layer and five-domain structure.

In a smart household energy-related Internet-of-Things system, an intelligent gas meters, intelligent electric energy meters, intelligent heat energy meters and intelligent water meters may be used as the above energy meters, and gas company servers, electric company energy servers, heat energy company servers and tap water company servers, etc. may be used as the above operator servers (capable of communication, management and service). And the currently mainstream smartphones, PCs and other terminal devices capable of controlling may be used as the aforementioned user terminals.

Referring to Fig. 6, the first application of another embodiment of the present disclosure as mentioned above uses multi-to-one connection manner. That is, a plurality of energy meters are provided in the object platform, and one intelligent gateway for Internet of Things is provided in the communication platform. The plurality of energy meters are all connected with the same intelligent gateway for Internet of Things, and it is the one intelligent gateway for Internet of Things that manages them as a whole and transmits them to the servers in the major operator platforms via public network.

In conjunction with Figs. 6-10, the second application of another embodiment of the present disclosure as described above uses a multi-to-multi connection manner. That is, a plurality of energy meters are provided in the object platform, and a plurality of intelligent gateways for Internet of Things are provided in the communication platform. In this case, there are two kinds of connection manner.

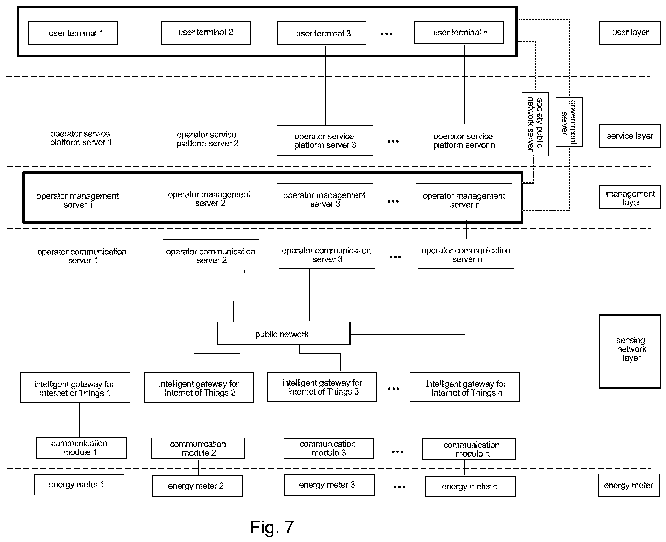

One is that the plurality of energy meters access their respective intelligent gateways for Internet of Things, as shown in Fig. 7, that is, the energy meters and the intelligent gateways for Internet of Things are connected one to one. For example, intelligent gateways for Internet of Things 1, 2, 3 and 4 correspond to energy meters 1, 2, 3 and 4 respectively in Fig. 7, and if intelligent gateway for Internet of Things 1 is a tap water intelligent gateway, then energy meter 1 would be an intelligent water meter.

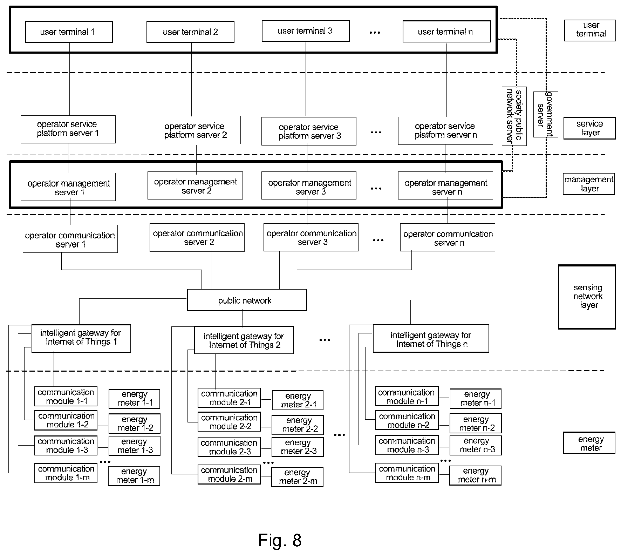

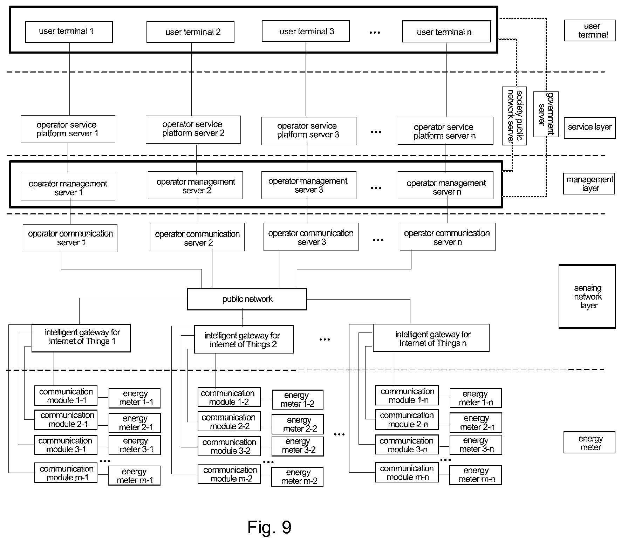

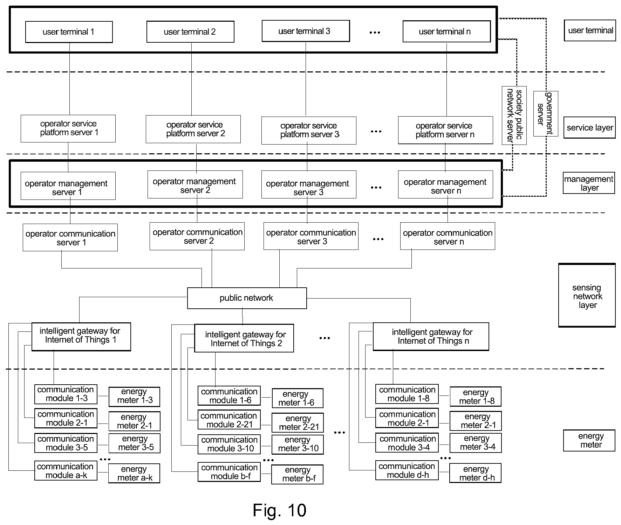

The other is that a plurality of energy meters are grouped into a plurality of sensing units as shown in Figs. 8-10, that is, the above system contains a plurality of sensing units, and each of sensing units includes at least one energy meter, and the at least one energy meters in each of the sensing units access a same intelligent gateway for Internet of Things. And the energy meters in the aforementioned sensing units are ones for a same kind of service as shown in Fig. 8 and ones providing different kinds of service as shown in Figs. 9 and 10. For example, when applied in the energy platform of a smart city, intelligent gateway for Internet of Things 2 as shown in Fig. 8 corresponds to energy meters 2-1, 2-2 and 2-3, and if intelligent gateway for Internet of Things 2 is a tap water intelligent gateway, then energy meters 2-1, 2-2 and 2-3 would be three intelligent water meters. Further, water meters and electric energy meters may also share one intelligent gateway for Internet of Things, or intelligent water meters, gas meters and heat energy meters may share one intelligent gateway for Internet of Things, specifically described below.

In Fig. 9, several energy meters providing different kinds of service belong to a single user, intelligent gateway for Internet of Things 1 corresponds to energy meters 1-1, 2-1 and 3-1, intelligent gateway for Internet of Things 1 is the intelligent gateway for water or gas or heat, and energy meter 1-1 is an intelligent water meter, energy meter 2-1 is an intelligent gas meter, and energy meter 3-1 is an intelligent heat energy meter.

In Fig. 10, several energy meters providing different kinds of service belong to different users, and intelligent gateway for Internet of Things 2 corresponds to energy meters 1-6, 2-21 and 3-10, where intelligent gateway for Internet of Things 2 is the intelligent gateway for water or gas or heat, and energy meter 1-6 is an intelligent water meter, energy meter 2-21 is an intelligent gas meter, and energy meter 3-10 is an intelligent heat energy meter. In the above embodiment of the present disclosure, by configuring the Internet of Things with a system structure with an object, communication, management, service and a user, such that the circulation of information becomes clearer in the Internet of Things, and transmission through multiple nodes further reduces the risk of information tampering during circulation and transmission. Sensing information and control information in the Internet-of-Things system are transmitted, via two different transmission paths, in opposite directions between the object platform and the user platform, which forms a closed loop, preventing mutual interference between the sensing information and the control information during transmission. In addition, the servers, Intelligent gateways for Internet of Things, users and energy meters in the Internet-of-Things system may be connected with each other in one-to-one, multi-to-one or multi-to-multi manner, etc. for transmission of sensing information and control information, satisfying the various requirements of using Internet of Things in a smart city system.

Referring to Figs. 6-10, as aforementioned, by the idea that the energy meters are connected with the intelligent gateways for Internet of Things in the Internet-of-Things system as described, the other nodes in the Internet-of-Things system of the present disclosure may be connected in a similar way, as detailed below. Those skilled in the art would have thought of various similar embodiments of the present disclosure in different fields of application with references to the following description.

According to one of the embodiments of the present disclosure, one intelligent gateway for Internet of Things is provided in the above communication platform, and a plurality of operator management servers are provided in the management platform, and the intelligent gateway for Internet of Things is connected with each of the plurality of operator management servers, that is, they are connected in a one-to-multi manner.

In addition, a plurality of Intelligent gateways for Internet of Things may be provided in the above communication platform, a plurality of operator servers may be provided in the management platform and the service platform, and the plurality of intelligent gateways for Internet of Things are connected with their respective operator management servers, that is, they are connected one to one.

Similar to the above embodiment, a plurality of intelligent gateways for Internet of Things may also be provided in the communication platform, and a plurality of operator servers may be provided in the management platform and the service platform, and the plurality of intelligent gateways for Internet of Things are grouped into a plurality of intelligent gateway units, that is, the above system contains a plurality of intelligent gateway units, and each of the gateway units includes at least one Intelligent gateway for Internet of Things, and the energy meters in each of the gateway units access a same operator server. That is, they are connected in a multi-to-multi manner. In the case of multi-to-multi connections, there are two circumstances, one of which is that the intelligent gateways for Internet of Things in the intelligent gateway units are for a same kind of service, and the other being that the intelligent gateways for Internet of Things in the intelligent gateway units are providing different kinds of service. See the above embodiments where the energy meters and the intelligent gateways for Internet of Things are connected in a multi-to-multi manner for details.

By such idea, the structure in the above embodiment may also be reversed, that is, a plurality of Intelligent gateways for Internet of Things are provided in the communication platform, and a plurality of operator servers are provided in the management platform and the service platform, and the difference lies in that the plurality of operator servers are grouped into a plurality of server units, that is, the management platform contains a plurality of server units and each of the server units includes at least one operator server, and the at least one operator servers in each of the server units access a same intelligent gateway for Internet of Things. In such multi-to-multi connection manner, there are two circumstances, one of which is that the operator servers in the server units provide a same kind of service, and the other being that the operator servers in the server units provide different kinds of service. See still the above embodiments where the energy meters and the intelligent gateways for Internet of Things are connected in a multi-to-multi manner for details.

According to another embodiment of the present disclosure, one user terminal is provided in the user platform, and a plurality of operator servers are provided in the management platform and the service platform, and the one user terminal is connected, via a public service network, with each of the plurality of operator service platform servers, that is, they are connected in a one-to-multi manner.

In addition, a plurality of user terminals may be provided in the above user platform, and only one operator server is provided in each of the management platform and the service platform, so that the plurality of user terminals access, via the public service network, a same operator service platform server, that is, they are connected in a multi-to-one manner.

Likewise, a plurality of user terminals may be provided in the above user platform, and a plurality of operator servers are provided in the management platform and the service platform, and the plurality of user terminals are connected, via the public service network, with their respective operator service platform servers, that is, they are connected in a one-to-one manner.

Similar to the above embodiment, a plurality of user terminals are provided in the user platform, and a plurality of operator servers are provided in the management platform and the service platform, and the plurality of user terminals may be grouped into a plurality of user units, that is, the above system contains a plurality of user units and each of the user units includes at least one user terminal, and the at least one user terminals in each of the user units access, via the public service network, a same operator service platform server, that is, they are connected in a multi-to-multi manner. In such multi-to-multi connection manner, there are two circumstances, one of which is that the user terminals in the user units are for a same kind of service, and the other being that the user terminals in the user units provide different kinds of service.

By such idea, the structure in the above embodiment may also be reversed, that is, a plurality of user terminals are still provided in the user platform and a plurality of operator servers are provided in the management platform and the service platform, and the difference lies in that the plurality of operator servers are grouped into a plurality of server units, that is, the service platform contains a plurality of server units, each of the server units includes at least one operator server, and the operator service platform servers in each of the server units access a same user terminal, and the connection between them may also be done via the above public service network. In such multi-to-multi connection manner, there are still two circumstances, one of which is that the operator servers in the server units are for a same kind of service, and the other being that the operator servers in the server units provide different kinds of service. Thereby, users may output control information to one or more operator service platform servers in the service platform through one or more user terminals over the public service network.

It is to be noted that the operator communication servers (i.e. gas communication servers, electric energy communication servers, heat energy communication servers and tap water communication servers), the operator management servers (i.e. gas management servers, electric energy management servers, heat energy management servers and tap water management servers) and the operator service platform servers (i.e. gas service servers, electric energy service servers, heat energy service servers and tap water service servers) constituting the operator servers (i.e. gas company servers, electric power company servers, heat power company servers and water supply company servers) as described above may also be connected in one-to-one, multi-to-one or multi-to-multi manner as the above embodiments. Those skilled in the art would have reproduced a same with reference to the above embodiments and thus no details will be repeated here.

In addition, it is to be noted that "an embodiment", "another embodiment" and "embodiments" as referred to in the present description mean that the specific features, structures or characteristics described by such embodiment(s) are included in at least one embodiment generally described in the present application. A same expression appearing in several locations in the present description does not necessarily refer to a same embodiment. Further, when describing a specific feature, structure or characteristic in combination with any embodiment, it means that implementing such feature, structure or characteristic in combination with other embodiments also falls within the scope of the present disclosure.

Though the present disclosure is described with reference to a plurality of illustrative embodiments of the present disclosure, it should be understood that those skilled in the art may come up with many other modifications and implementations which will fall within the scope of principle and spirit as disclosed by the present application. More specifically, many variations and improvements may be made to the components and/or arrangements constituting the combined arrangements of the subject within the scope of disclosure, accompanying drawings and claims of the present application. In addition to the variations and improvements to the constituting components and/or arrangements, other uses will also be apparent to those skilled in the art.

## Claims

1. A smart household energy-related Internet-of-Things system applicable to a smart city system, wherein the Internet-of-Things system comprises:
an object platform comprising at least one energy meter connected with an intelligent gateway for Internet of Things, wherein the at least one energy meter is configured to collect sensing information and transmit the sensing information to the intelligent gateway for Internet of Things, and the at least one energy meter is configured to receive, via the intelligent gateway for Internet of Things, control information and perform control;
a communication platform connected, via a network, with each of the object platform and a management platform, wherein the communication platform comprises at least one intelligent gateway for Internet of Things, wherein the at least one intelligent gateway for Internet of Things is configured to transmit the sensing information to the management platform and transmit the control information to the object platform;
a management platform connected with each of the communication platform and a service platform, wherein the management platform comprises at least one operator server, and the at least one operator server is configured to transmit the sensing information to the service platform and transmit the control information to the communication platform;
a service platform connected with each of the management platform and a user platform, wherein the service platform comprises at least one operator server, and the at least one operator server of the service platform is configured to transmit the sensing information to the user platform and transmit the control information to the management platform; and
a user platform connected with the service platform and comprising at least one user terminal, wherein the at least one user terminal is configured to receive the sensing information and transmit the control information to the service platform.

2. The smart household energy-related Internet-of-Things system applicable to a smart city system according to claim 1, wherein the at least one user terminal is connected, via a public service network, with the operator server of the service platform.

3. The smart household energy-related Internet-of-Things system applicable to a smart city system according to claim 2, wherein the operator servers of the management platform and the service platform comprise an operator communication server, an operator management server and an operator service platform server connected in sequence, with the operator communication server accessing the intelligent gateway for Internet of Things, the operator service platform server accessing the public service network, and the operator communication server, the operator management server and the operator service platform server being independent of each other or integrated, in a physical system of a smart city.

4. The smart household energy-related Internet-of-Things system applicable to a smart city system according to claim 1, wherein the object platform comprises a plurality of energy meters, the communication platform comprises one intelligent gateway for Internet of Things, and the plurality of energy meters access a same intelligent gateway for Internet of Things.

5. The smart household energy-related Internet-of-Things system applicable to a smart city system according to claim 1, wherein the object platform comprises a plurality of energy meters, the communication platform comprises a plurality of intelligent gateways for Internet of Things, and the plurality of energy meters access respective intelligent gateways for Internet of Things, respectively.

6. The smart household energy-related Internet-of-Things system applicable to a smart city system according to claim 1, wherein the object platform comprises a plurality of energy meters, the communication platform comprises a plurality of intelligent gateways for Internet of Things, and the Internet-of-Things system comprises a plurality of sensing units, with each of the sensing units comprising at least one energy meter, and the at least one energy meter in each of the sensing units accessing a same intelligent gateway for Internet of Things.

7. The smart household energy-related Internet-of-Things system applicable to a smart city system according to claim 6, wherein the energy meters in the sensing units are energy meters providing a same kind of service or different kinds of service.

8. The smart household energy-related Internet-of-Things system applicable to a smart city system according to claim 1, wherein the communication platform comprises one intelligent gateway for Internet of Things, the management platform and the service platform each comprise a plurality of operator servers, and the intelligent gateway for Internet of Things accesses the plurality of operator servers of the management platform.

9. The smart household energy-related Internet-of-Things system applicable to a smart city system according to claim 1, wherein the communication platform comprises a plurality of intelligent gateways for Internet of Things, the management platform and the service platform each comprise a plurality of operator servers, and the plurality of intelligent gateways for Internet of Things access respective operator servers of the management platform, respectively.

10. The smart household energy-related Internet-of-Things system applicable to a smart city system according to claim 1, wherein the communication platform comprises a plurality of intelligent gateways for Internet of Things, the management platform and the service platform each comprise a plurality of operator servers, and the Internet-of-Things system comprises a plurality of intelligent gateway units, with each of the intelligent gateways unit comprising at least one intelligent gateway for Internet of Things, and the at least one intelligent gateway for Internet of Things in each of the intelligent gateway units accessing a same operator server of the management platform.

11. The smart household energy-related Internet-of-Things system applicable to a smart city system according to claim 10, wherein the intelligent gateways for Internet of Things in the intelligent gateway units are Intelligent gateways for Internet of Things providing a same kind of service or different kinds of service.

12. The smart household energy-related Internet-of-Things system applicable to a smart city system according to claim 1, wherein the communication platform comprises a plurality of intelligent gateways for Internet of Things, the management platform and the service platform each comprise a plurality of operator servers, and the management platform comprises a plurality of server units, with each of the server units comprising at least one operator server, and the at least one operator server in each of the server units accessing a same intelligent gateway for Internet of Things.

13. The smart household energy-related Internet-of-Things system applicable to a smart city system according to claim 2, wherein the user platform comprises one user terminal, the management platform and the service platform each comprise a plurality of operator servers, and the one user terminal accesses, via the public service network, the plurality of operator servers of the service platform.

14. The smart household energy-related Internet-of-Things system applicable to a smart city system according to claim 2, wherein the user platform comprises a plurality of user terminals, the management platform and the service platform each comprise one operator server, and the plurality of user terminals all access, via the public service network, a same operator server of the service platform.

15. The smart household energy-related Internet-of-Things system applicable to a smart city system according to claim 2, wherein the user platform comprises a plurality of user terminals, the management platform and the service platform each comprise a plurality of operator servers, and the plurality of user terminals access, via the public service network, respective operator servers of the service platform, respectively.

16. The smart household energy-related Internet-of-Things system applicable to a smart city system according to claim 2, wherein the user platform comprises a plurality of user terminals, the management platform and the service platform each comprise a plurality of operator servers, and the Internet-of-Things system comprises a plurality of user units, with each of the user units comprising at least one user terminal, and the at least one user terminal in each of the user units accessing, via the public service network, a same operator server of the service platform.

17. The smart household energy-related Internet-of-Things system applicable to a smart city system according to claim 16, wherein the user terminals in the user units are user terminals providing a same kind of service or different kinds of service.

18. The smart household energy-related Internet-of-Things system applicable to a smart city system according to claim 2, wherein the user platform comprises a plurality of user terminals, the management platform and the service platform each comprise a plurality of operator servers, and the service platform comprises a plurality of server units, with each of the server units comprising at least one operator server, and the at least one operator server in each of the server units accessing, via the public service network, a same user terminal.

19. The smart household energy-related Internet-of-Things system applicable to a smart city system according to claim 12 or 18, wherein the operator servers in the server units are operator servers providing a same kind of service or different kinds of service.

20. The smart household energy-related Internet-of-Things system applicable to a smart city system according to any one of claims 1 to 18, wherein the energy meter comprises any one or more of an intelligent gas meter, an intelligent electric energy meter, an intelligent heat energy meter and an intelligent water meter.

21. The smart household energy-related Internet-of-Things system applicable to a smart urban network according to any one of claims 1 to 18, wherein the operator server comprises any one or more of a gas company server, an electric power company server, a heating power company server and a water supply company server.
